# EUROPEAN PATENT SPECIFICATION

(11) **EP 0 413 759 B1**
(45) Date of publication and mention of the grant of the patent: **26.02.1997**
(21) Application number: 89906276.4
(22) Date of filing: 08.05.1989
(51) Int. Cl.: G06F 7/04

(54) **A METHOD AND ARRANGEMENT FOR CHANNEL MONITOR AND CONTROL**
VERFAHREN UND ANORDNUNG ZUR KANALSTEUERUNG UND -KONTROLLE
PROCEDE ET AGENCEMENT DE COMMANDE ET DE CONTROLE DE CANAUX

(30) Priority: 09.05.1988 US 191530
(43) Date of publication of application: 27.02.1991
(73) Proprietor: MOTOROLA, INC., Schaumburg, IL 60196 (US)
(72) Inventor: BRUCKERT, Eugene, J., Arlington Heights, IL 60005 (US); ENGEL, James Robert, Marengo, IL 60152 (US)
(74) Representative: Dunlop, Hugh Christopher
(86) International application number: US8901908
(87) International publication number: WO8911126

(56) References cited:
- US-A- 4 332 027
- US-A- 4 646 082
- US-A- 4 688 035

## Description

### BACKGROUND OF THE INVENTION

This invention relates to the field of radio transport of alphanumeric messages to and from remote units and at least one base station, and specifically to a method and means for coordinating inbound transmissions to the base station wherein collisions between coded messages and acknowledgements on an inbound channel to the base station are minimized. The present application is related to the instant assignee's U.S. Patent No. 4, 646,082 issued February 24, 1987 entitled "Inbound Acknowledgement Stack" and invented by James R. Engel, et al. which addresses a problem when multiple messages are transmitted in a serial fashion, thereby preventing acknowledgements being transmitted from addressed remote units. This particular problem is resolved by utilising a counter to count the "message ends" and provide an inbound acknowledgement stack so that each of the addressed remote units will transmit its acknowledgement signal in a particular order to avoid simultaneous transmission of acknowledgements.

Portable Data terminal systems have been developed for providing data message communications over a conventional radio frequency (RF) link in order to couple remote units, or terminals, to at least one base station, and ultimately to a host computer, to provide operational command and control for a public service agency or the like. Such RF communication systems typically operate on two channels, namely, an inbound channel and an outbound channel to the base station. Thus, although the remote units typically operate in half-duplex mode by transmitting on the inbound channel to the base station and receiving on the outbound channel, the base station transmits on its outbound channel and receives on its inbound channel by utilizing a full-duplex mode.

The operation of this type of system is sequenced and controlled from the fixed end by a "system controller". This system controller organizes and generates the various outbound transmissions which generally include at least a header and a coded message as a single packet of information over the operating channel of the system. Each remote unit that receives an outbound transmission from the base station is generally required to send an acknowledgment (ACK). The base station will repeat its message to the various remote units until an ACK has been received.

One known improvement utilizes an imbedded inhibit signal in the outbound transmission to prevent other remote units from beginning a possibly interfering transmission when one is in progress. A second known improvement is the Inbound Acknowledgment Stack which is effective in preventing the simultaneous transmission of acknowledgment signals after a period of a relatively long inhibit. In implementing such a method and arrangement, several difficulties are introduced which increase the likelihood that collisions will occur in such a contention RF communications system.

The first problem is that when two or more remote units are transmitting simultaneously, at least one, and often both, inbound transmissions are lost.

A second type of difficulty with the prior art system is the inordinately long delay encountered before transmitting an inbound message when the status of the outbound channel is unknown.

A third type of difficulty occurs while waiting for frame sync, namely, bunching of messages which causes an increase in collisions, both of the message-message type and of the message-ACK type.

### Summary of the Invention

In a first aspect of the present invention, a method is provided as defined in claim 1.

In a second aspect of the present invention a remote unit is provided as defined in claim 10.

In this manner the invention provides a method and means for preventing mutual interference for collisions among inbound transmissions of any type, whether coded messages or ACKs to received messages. In addition, system reliability is improved by insuring that a prescribed remote unit transmits its ACK in a unique time slot and that other remote units are prevented from transmitting their coded messages preceded by a header in the ACK unique time slots, so that message-ACK collisions are virtually eliminated and message-message collisions are significantly reduced by eliminating message queue build-up during the wait for frame sync.

Briefly described, the present invention contemplates a method and means which are activated whenever a remote unit operator attempts to send an inbound transmission by hitting his push-to-talk (PTT) switch, or whenever the base station transmitter is transmitting. Each remote unit makes a sequence of decisions, including whether there is a delay, whether the base station transmitter is transmitting, and determining an inhibit state based upon an imbedded inhibit signal and information in the header to a coded message before transmitting on the inbound channel to the base station. This inhibit state prevents all of the other communication units from transmitting while a prescribed communication unit or remote unit transmits a message or an acknowledgment (ACK) so that collisions between messages and ACKs or between one ACK and another ACK are avoided. Message-message collisions are substantially reduced since the method causes a remote unit to utilize a random delay before attempting a retry to send the message a second time.

### BRIEF DESCRIPTION OF THE DRAWINGS

Fig. 1 is a block diagram of an RF communication system for exchanging data in the form of coded messages that may advantageously utilize the present invention.

Fig. 2A is a timing diagram showing an outbound transmission that includes two messages, each preceded by a header.

Fig. 2B is a timing diagram showing the relationship between transmitted messages, inhibit state, and a subsequent acknowledgment (ACK).

Fig. 2C is a timing diagram showing the relationship between transmitted messages, inhibit state, and a subsequent ACK 1 following the end of an inbound message as related back to the timing diagram of Fig. 2A.

Fig. 3 is another timing diagram showing the relationship between transmitted messages, inhibit state, and a plurality of subsequent ACKs.

Fig. 4 is a flow diagram detailing the operation of the method of the present invention.

Fig. 5 is an expanded block diagram of the remote units depicted in Fig. 1.

### DETAILED DESCRIPTION OF THE PREFERRED EMBODIMENT

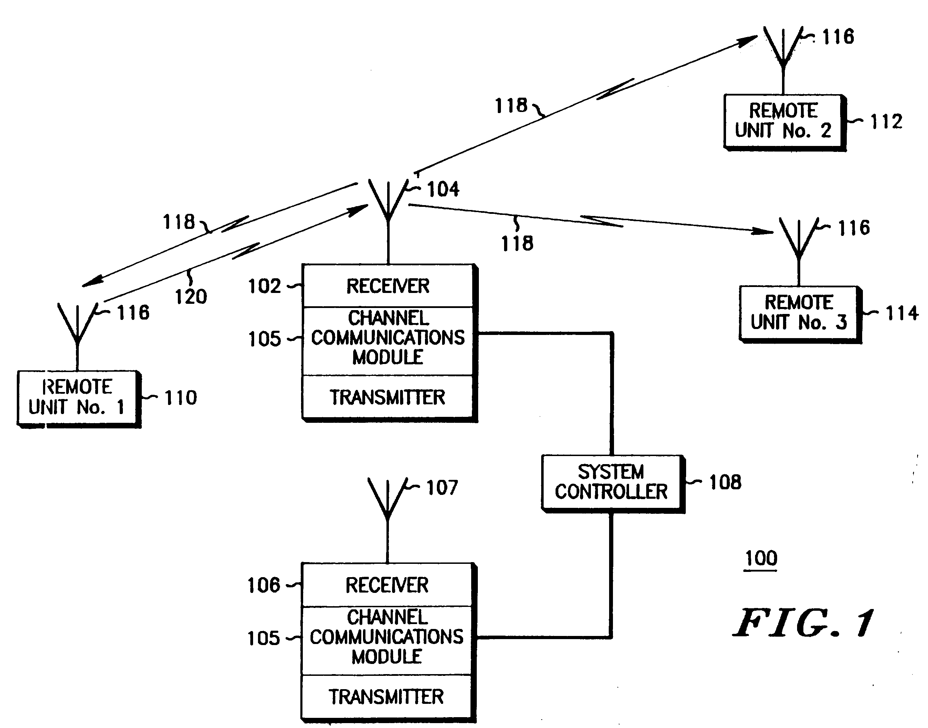

Referring now to Fig. 1, there is shown a block diagram of an RF communication system of the type which may advantageously utilize the present invention. This type of system includes a plurality of communication units and transmits alphanumeric data in the form of coded messages between a primary station, such as a base station (102) through an antenna (104) and via a communications medium, such as an RF channel.

A second base station (106) may be included in the system which couples to an antenna (107), to provide redundancy for improved reliability when co-located with the base station (102), or it may be located away from the base station (102) in order to expand the coverage area to a larger geographical area.

System controller (108) may be part of the base station or may be utilized separately to coordinate the operation between base station (102) and optional base station (106). The plurality of communication units comprise a plurality of remote units (110, 112 and 114), therein to communicate with the base station (102) as shown. During any given instant in time, the base station (102) sends an outbound transmission, represented by the numeral 118 and receives a single inbound transmission, represented by the numeral 120.

Base station (102) includes at least a receiver, a channel communications module (CCM), and a transmitter (105). Such equipment already exists and is available as Motorola MSF-5000 base station which includes a CCM having a Motorola GCC-480 therein. For systems having more than one base station, the system controller (108) is available as a Motorola GCC-480 therein. For systems having more than one base station, the system controller (108) is available as a Motorola NCP-500 or NCP-3000.

Remote units (110, 112, and 114) are available from Motorola in a variety of models, including KDT-440, KDT-460 and KDT-840. These and the aforementioned Motorola models and corresponding instruction manuals may be obtained from Motorola C & E Parts, 1303 East Algonquin Road, Schaumburg, Illinois 60196. Many of the above elements are described in U.S. Patent No. 4, 646,082 to Engel, et al., issued February 24, 1987 and assigned to the assignee of the present application.

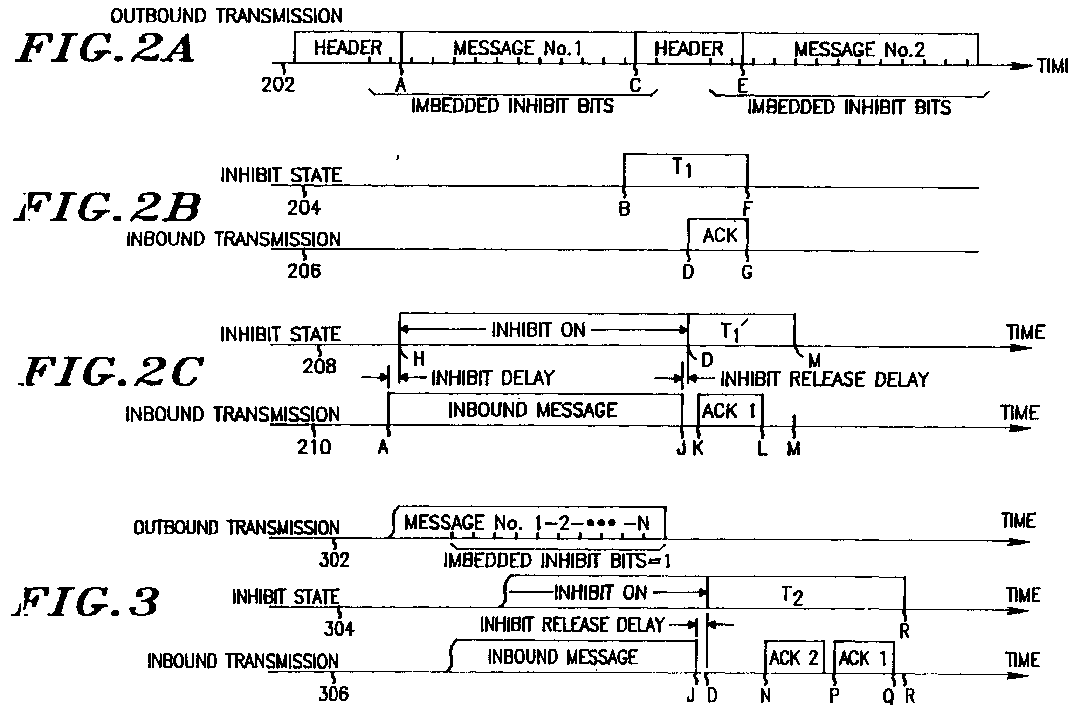

Although the above system has been described in terms of the arrangement depicted in Fig. 1, the system may optionally be configured according to that shown in Fig. 2 of issued U.S. Patent No. 4, 646, 082.

According to a feature of the present RF communication system, whether in the context of a data only system or both data and analog signals together, each of the remote units receives an outbound transmission from the base station. The outbound transmission comprises at least a header and a coded message. The coded message is received at a prescribed remote unit and is decoded only when the coded message is intended for that prescribed remote unit. The prescribed remote unit replies with an acknowledgement (ACK) or a coded message on an inbound transmission that includes a header and a coded message. The various combinations and situations of signals occurring over time can best be seen by turning to the various timelines given in Fig. 2.

Referring now to Fig. 2A, an outbound transmission is depicted along a timeline (202) that has a sequence of two messages, each preceded by a header. Note that within the header and coded message #1 (MES.1) there exists a periodically recurring, imbedded inhibit signal within the bracket labelled imbedded inhibit bits. These "tick" marks represent approximate time occurrences of these bits, whether they are digital ones (1) or zeros (0).

The inhibit state bits (ISBs) are imbedded in the coded message following the header and may be imbedded in part or in all of the header. The preferred embodiment utilizes an input data buffer in which all of the incoming bits are serially entered in ascending order into a (7 x 16) matrix to the extent of the variable duration of a given coded message:

| | | |
|---|---|---|
| b1, | b2,... | B15, b16 |
| b17, | b18,... | b31, B32 |
| ... | | B47, b48 |
| ... | | b63, B64 |
| ... | | B79, b80 |
| ... | | b95, B96 |
| b97, | b98 | B111, b112 |

Those bits identified by capital letters, above, are reserved for the ISBs, of which the three latest received ISBs are utilized in the preferred embodiment of the present invention. All (1)s indicated inbound channel activity, all (0)s indicate inbound channel inactivity, and any mixture of (1)s and (0)s indicate an indefinite state of activity. Other arrangements could be utilized.

Two pointers are utilized within the above matrix, namely the input data buffer pointer to locate where the next data byte is to be stored, and the ISB pointer that points to the last of the latest three ISBs.

Next, Fig. 2B shows an inhibit state represented by block T₁ along a timeline (204). As will be seen in a moment, this inhibit state is based upon the imbedded inhibit signal and information in the header within a given outbound transmission, such as depicted in Fig. 2A, above. During this inhibit state, T₁, all of the plurality of remote units, except for the one acknowledging the message #1, are inhibited, while the prescribed remote unit #1 to whom the message is addressed acknowledges the receipt of that message as shown by the inbound transmission block labelled ACK depicted on the timeline (206).

Thus, it should be evident that remote unit #1 is sending an acknowledgment back to the base station upon receipt of message #1 from the base station in the absence of any inbound transmission currently in process to the base station. Moreover, information is included in the header to indicate the length of message #1 to all of the remote units in order that a block of time greater than the duration of the anticipated ACK can be reserved as early as the point in time represented by B.

Next, Fig. 2C depicts a different situation in which the inhibit state is extended and begins earlier in time, as represented by point H on the inhibit state timeline (208). As such, this inhibit state remains on past the point labelled D through time interval T₁' and ending at the point labelled M. This extended inhibit state occurs for the situation where an inbound message is detected by the base station and the imbedded inhibit signal in the outbound transmission, in turn, alerts the remote units so as not to transmit until the conclusion of this inbound message, and further to allow for the anticipated acknowledgement ACK 1 shown on the inbound transmission timeline (210). In each of the above situations, namely that depicted in Fig. 2C and Fig. 2B, like reference letters are utilized for like points in time corresponding back to the outbound transmission timeline (202) depicted in Fig. 2A.

Yet another situation is depicted in Fig. 3 in which a sequence of many messages are sent sequentially in an outbound transmission, as depicted on timeline (302). Furthermore, given that an inbound message exists, the inhibit state will have been activated ON, as shown on timeline (304) and will also include an additional time period T₂ that ends at the point labelled R. For this situation, the inbound transmissions received by the base station will include an inbound message ending at the point labelled J followed by an inhibit release delay time extending to the point labelled D, after which the plurality of ACKs anticipated to be sent as a result of the multitude of messages 1-N, will be sent in a sequence such as is shown for ACK2 followed by ACK1 which ends before the point in time labelled R.

Thus, this situation depicts a stack interval that is created at the end of the inbound transmission to the base station so that a time slot is reserved for an ACK from the second remote unit and an adjacent time slot is reserved for an ACK from the first remote unit without collisions.

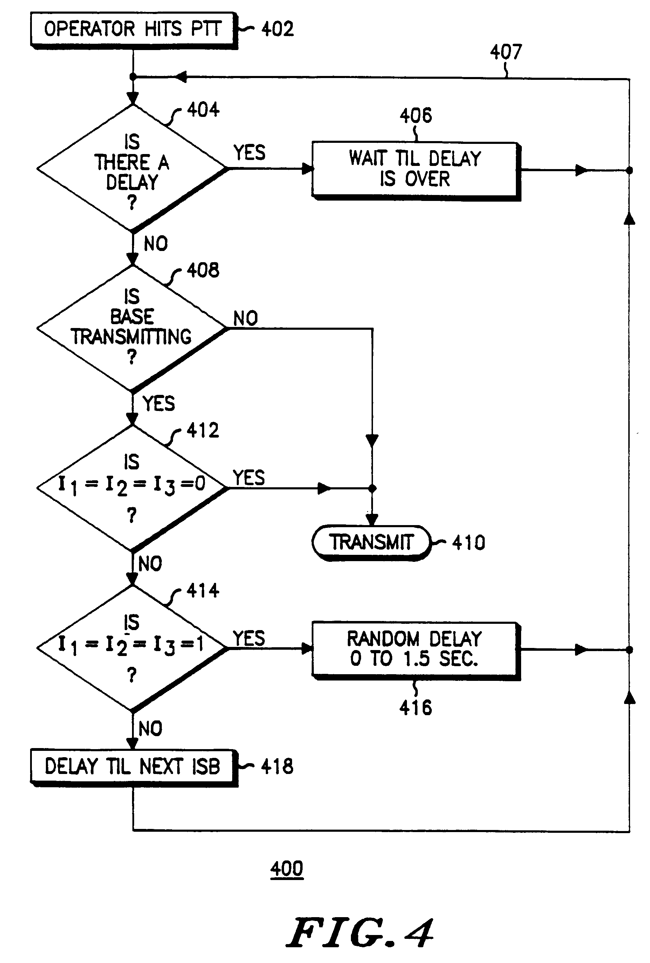

Turning next to Fig. 4, a flowchart is shown of the decisions required to be made within the remote unit to enable transmission. Beginning at block (402), the operator wishes to transmit a message and hits his PTT switch, which then initiates a decision in block (404). Block (404) represents the step of checking whether an initial delay has been set to prohibit transmission for a prescribed delay duration. Such prescribed delay may be due to a random delay or various other delays as will be seen in a moment.

If there is a delay, the method proceeds to wait until this delay is over, as represented in block (406). When this delay is over, the method proceeds to check again whether there are any new delays since the last time it checked, as represented by the return path (407).

If there are no further delays encountered in block (404), the method proceeds to check whether the base station is transmitting as represented in block (408). If the base station is not transmitting, then the method assumes that there are no current inbound transmissions and therefore authorizes this prescribed remote unit to be allowed to transmit, as represented by block (410).

If, however, the base station is transmitting, as determined in block (408), the method next determines an inhibit state based upon the inhibit signal or inhibit an state bits, as represented in block (412). In making this determination, the method determines the inhibit state by looking at the latest three inhibit state bits to determine if they are all equal to zero. If this is so, then the method allows this prescribed remote unit to transmit, as represented at block (410).

If the inhibit state bits are not all logical 0, as determined in block (412), then the method next checks these inhibit state bits to determine if they are all equal to a logical 1, as represented in block (414). If the determination is YES, the method proceeds to abide by a random delay which may be of a prescribed duration anywhere between 0 and 1.5 seconds, as represented in block (416). Upon completing this delay, the method begins again at the starting point as represented by return line (407).

If, however, the determination in decision block (414) was NO, then the method delays allowing the remote unit to transmit until the next inhibit state bit has been received, as represented in block (418), and then returns via return path (407) to begin the four step decision process again.

Various other delays may be utilized that ensure that any existing ACK interval has finished before another transmission is allowed. These delays may be of a predetermined or random length.

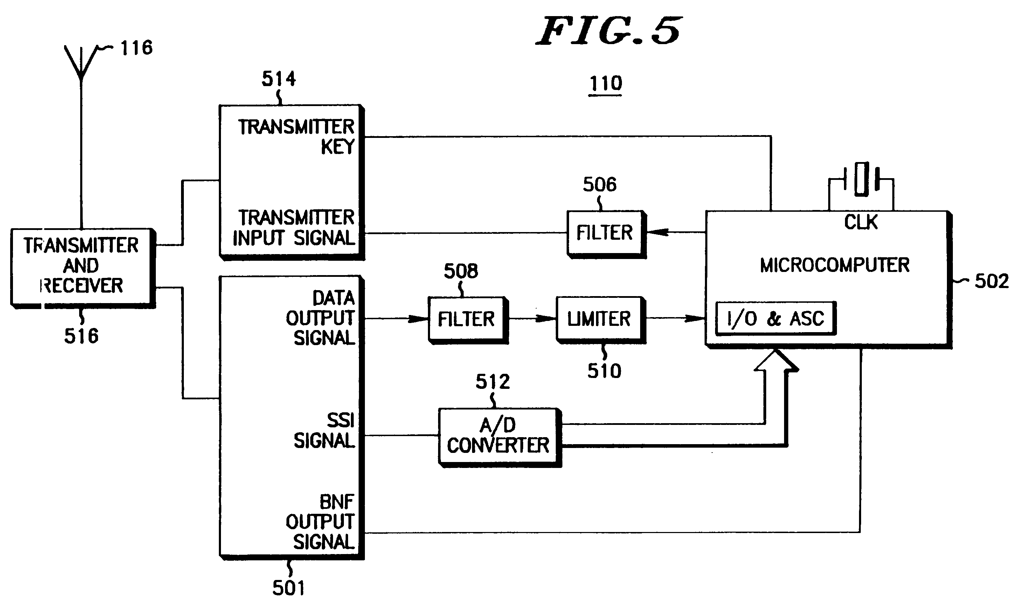

Finally, Fig. 5 depicts an expanded block diagram of a typical remote unit, such as remote unit (110). As shown, it includes a receiver (501), a microcomputer (502) and various interface ports for handling input and output data signals. Included are transmitter filter (506)., receiver filter (508) and limiter (510), and an A/D (analog-to-digital) converter (512). A transmitter key control line is also shown coupled to an included transmitter (514), which couples to a transmit-receive switch (516) which couples to an included antenna (116) as well as to the receiver (501).

In summary, a method and means for controlling transmissions among a plurality of communication units has been described that determines an inhibit state based upon an inhibit signal and information in the header before transmitting. This inhibit state prevents all of the other remote units from transmitting while a prescribed remote unit transmits a message or an acknowledgment (ACK) so that collisions between messages and ACKs, or between one ACK and another, are avoided. Message-message collisions are substantially reduced since the method causes a remote unit to utilize a random delay before attempting a retry to send the message a second time. Accordingly, other uses and modifications will be obvious to one skilled in art without departing from the scope of the present invention.

## Claims

1. In an RF communications system having at least one base station transmitting on an outbound channel and a plurality of remote units that transmit to said base station on an inbound channel, a method for preventing collisions among inbound transmissions utilized by said plurality of remote units characterised by the steps of:
a) receiving at the plurality of remote units an outbound transmission on the outbound channel, each outbound transmission comprising at least a header containing information as to a coded message's length, a coded message, and an imbedded inhibit signal, at least some of said outbound messages requiring an acknowledgement (ACK) of a predetermined duration on said inbound channel; and
b) determining an inhibit state, based upon said imbedded inhibit signal and information in said header before transmitting on said inbound channel, and where said inhibit state includes a first portion essentially corresponding to the duration of said transmitted outbound message and effective for all remote units except a unit currently transmitting on said inbound channel, and a second portion extending beyond said first portion, sufficient to encompass said ACK when the same is required, and effective for all remote units except a unit or units addressed in said transmitted outbound message and required to transmit such an ACK response to an outbound message.

2. The method according to claim 1 wherein step a) includes receiving a coded message at a prescribed remote unit, said coded message being decoded only when said coded message in said outbound transmission is intended for said prescribed remote unit.

3. The method according to any of the preceding claims, wherein step a) comprises receiving an outbound transmission that includes a plurality of headers and coded messages arranged in sequence, said outbound transmission including an imbedded inhibit signal, and said outbound transmission requiring an ACK on said inbound channel for at least some of said plurality of sequential coded messages.

4. The method according to any of the preceding claims, wherein step b) includes determining said inhibit state for said plurality of remote units, except for a prescribed remote unit, when said imbedded inhibit signal indicates that there is no inbound transmission to said base station, so as to reserve a time slot for said ACK to be transmitted by said prescribed remote unit at the end of said outbound transmission.

5. The method according to any of the preceding claims, wherein step b) includes determining said inhibit state for substantially all of said plurality of remote units, including a prescribed remote unit, when said imbedded inhibit signal indicates that there is an inbound transmission currently in progress to said base station that has preceded an ACK by a predetermined amount of time, so as to reserve a time slot for said ACK to be transmitted by said prescribed remote unit at the end of said inbound transmission.

6. The method according to any of the preceding claims, wherein step b) includes determining said inhibit state for said plurality of remote units, except for a prescribed first remote unit and a second remote unit, when said imbedded inhibit signal indicates that there is an inbound transmission to said base station, said prescribed first unit having decoded a first message in said outbound transmission and awaiting a time slot to ACK, and said second remote unit having decoded a subsequent message in said outbound transmission from said base station, so as to reserve a stack interval at the end of said inbound transmission to said base station, said stack interval allowing at least a time slot for an ACK from said second remote unit and an adjacent time slot for an ACK from said first remote unit.

7. The method according to claim 6, wherein said imbedded inhibit signal comprises at least some of a sequence of digital data bits imbedded in said outbound transmission.

8. The method according to claim 7, wherein said digital data bits comprise at least three bits, including:
a) all digital ones, indicating inbound channel activity, so as to prohibit a concurrent transmission on said inbound channel;
b) all digital zeros, indicating inbound channel inactivity, so as to permit a transmission on said inbound channel; and
c) any mixture of digital ones and zeros, indicating an indefinite state of inbound channel activity, so as to delay a transmission until a new set of at least three digital data bits are received.

9. The method according to any of the preceding claims further comprising the step of:
d) transmitting on said inbound channel when said inbound channel has no ACKs in progress, has no inbound message in progress, and has no inbound message currently in progress which has preceded at least one required ACK that is anticipated to be transmitted on said inbound channel, so as to ensure that said inbound channel is clear or is anticipated to be clear, thereby avoiding collisions of inbound transmissions from at least two remote units.

10. A remote unit for operation in an RF communications system having at least one base station transmitting on an outbound channel and a plurality of remote units that transmit to said base station on an inbound channel, the remote unit comprising:
a receiver arranged to receive on the outbound channel an outbound transmission, each outbound transmission comprising at least a header containing information as to a coded messages length, a coded message and an imbedded inhibit signal;
a transmitter arranged to transmit an acknowledgement (ACK) of a predetermined duration on said inbound channel when required by the outbound transmission;
and the remote unit characterised by
means arranged to determine for that remote unit an inhibit state, which includes a time period extending beyond the duration of said transmitted coded message, sufficient to encompass said ACK when the same is required, said inhibit state being based upon said imbedded inhibit signal and information in said header before transmitting on said inbound channel, and where said inhibit state includes a first portion essentially corresponding to the duration of said transmitted outbound message and effective for all remote units except a unit currently transmitting on said inbound channel, and a second portion extending beyond said first portion, sufficient to encompass said ACK when the same is required, and effective for all remote units except a unit or units addressed in said transmitted outbound message and required to transmit such an ACK response to an outbound message.

## Patentansprüche

1. Ein Verfahren zum Verhindern von Kollisionen unter ankommenden Übertragungen, die in einem RF-Kommunikationssystem mit wenigstens einer Basisstation, die auf einem Abnehmerkanal überträgt, und mit einer Mehrzahl von Außeneinheiten, die an die Basisstation auf einem Zubringerkanal übertragen, durch die Mehrzahl der Außeneinheiten verwendet werden, umfassend die Schritte:
a) Empfangen einer abgehenden Übertragung auf dem Abnehmerkanal in der Mehrzahl der Außeneinheiten, wobei jede abgehende Übertragung wenigstens eine Kopfzeile, die Information über die Länge einer codierten Nachricht aufweist, eine codierte Nachricht und ein eingebettetes Sperrsignal umfaßt, wobei wenigstens einige der abgehenden Nachrichten eine Bestätigung (ACK) einer vorbestimmten Länge auf dem Zubringerkanal fordern; und
b) Bestimmen eines Sperrzustands, basierend auf dem eingebetteten Sperrsignal und der Information in der Kopfzeile bevor auf dem Zubringerkanal übertragen wird, und wobei der Sperrzustand einen ersten Abschnitt umfaßt, der im wesentlichen der Dauer der übertragenen abgehenden Nachricht entspricht und für alle Außeneinheiten mit Ausnahme einer Einheit, die momentan auf dem Zubringerkanal überträgt, wirksam ist, und einen zweiten Abschnitt, der sich über den ersten Abschnitt erstreckt, ausreichend ist, um das ACK herbeizuführen, wenn dasselbe gefordert wird, und für alle Außeneinheiten mit Ausnahme einer Einheit oder von Einheiten, die in der übertragenen abgehenden Nachricht adressiert ist bzw. sind, und von der bzw. denen gefordert wird, eine ACK-Erwiderung auf eine abgehende Nachricht hin zu übertragen, wirksam ist.

2. Das Verfahren nach Anspruch 1, in welchem der Schritt a) das Empfangen einer codierten Nachricht in einer vorbeschriebenen Außeneinheit umfaßt, wobei die codierte Nachricht nur decodiert wird, wenn die codierte Nachricht in der abgehenden Übertragung für die vorbeschriebene Außeneinheit bestimmt ist.

3. Das Verfahren nach einem der vorangegangenen Ansprüche, in welchem Schritt a) das Empfangen einer abgehenden Übertragung umfaßt, die eine Mehrzahl von Kopfzeilen und codierten Nachrichten, die in einer Folge angeordnet sind, umfaßt, wobei die abgehende Übertragung ein eingebettetes Sperrsignal umfaßt, und wobei die abgehende Übertragung ein ACK auf dem Zubringerkanal für wenigstens einige der Mehrzahl der sequentiell codierten Nachrichten fordert.

4. Das Verfahren nach einem der vorangegangenen Ansprüche, in welchem Schritt b) das Bestimmen des Sperrzustands für die Mehrzahl der Außeneinheiten mit Ausnahme einer vorbestimmten Außeneinheit umfaßt, wenn das eingebettete Sperrsignal anzeigt, daß keine in der Basisstation eingehende Übertragung vorliegt, so daß ein Zeitschlitz für das durch die vorbeschriebene Außeneinheit zu übertragende ACK am Ende der abgehenden Übertragung reserviert wird.

5. Das Verfahren nach einem der vorangegangenen Ansprüche, in welchem Schritt b) die Bestimmung des Sperrzustands für im wesentlichen alle der Mehrzahl der Außeneinheiten einschließlich einer vorbeschriebenen Außeneinheit umfaßt, wenn das eingebettete Sperrsignal anzeigt, daß momentan eine in der Basisstation eingehende Übertragung im Gang ist, welcher vor einer vorbestimmten Zeitdauer ein ACK vorangegangen ist, so daß ein Zeitschlitz für das durch die vorbeschriebene Außeneinheit zu übertragende ACK am Ende der abgehenden Übertragung reserviert wird.

6. Das Verfahren nach einem der vorangegangenen Ansprüche, in welchem Schritt b) die Bestimmung des Sperrzustands für die Mehrzahl der Außeneinheiten ausschließlich einer vorbeschriebenen ersten Außeneinheit und einer zweiten Außeneinheit umfaßt, wenn das eingebettete Signal anzeigt, daß eine in der Basisstation eingehende Übertragung im Gang ist, wobei die vorbeschriebene erste Einheit eine erste Nachricht in der abgehenden Übertragung decodiert hat und einen Zeitschlitz für das ACK erwartet, und wobei die zweite Außeneinheit eine nachfolgende Nachricht in der von der Basisstation abgehenden Übertragung decodiert hat, so daß ein Stapelintervall am Ende der in der Basisstation eingehenden Übertragung reserviert wird, wobei das Stapelintervall wenigstens einen Zeitschlitz für ein ACK von der zweiten Außeneinheit und einen benachbarten Zeitschlitz für ein ACK von der ersten Außeneinheit zur Verfügung stellt.

7. Das Verfahren nach Anspruch 6, in welchem das eingebettete Sperrsignal wenigstens etwas von einer Sequenz von digitalen Datenbits, die in der abgehenden Nachricht eingebettet sind, aufweist.

8. Das Verfahren nach Anspruch 7, in welchem die digitalen Datenbits wenigstens drei Datenbits umfassen, aufweisend:
a) nur digitale Einsen, die eine Zubringerkanalaktivität anzeigen, so daß eine nachfolgende Übertragung auf dem Zubringerkanal verhindert wird;
b) nur digitale Nullen, die eine Nichtaktivität des Zubringerkanals anzeigen, so daß eine Übertragung auf dem Zubringerkanal erlaubt wird; und
c) eine beliebige Mischung von digitalen Einsen und Nullen, die einen indefiniten Zustand der Aktivität des Zubringerkanals anzeigen, so daß eine Übertragung verzögert wird, bis ein neuer Satz aus wenigstens drei digitalen Datenbits empfangen wird.

9. Das Verfahren nach einem der vorangegangenen Ansprüche, weiter umfassend den Schritt:
d) Übertragen auf dem Zubringerkanal, wenn der Zubringerkanal keine ACKs in Verarbeitung hat, keine zugehende Nachricht in Verarbeitung hat und momentan keine zugehende Nachricht in Verarbeitung hat, welche wenigstens einem erforderlichen ACK vorangegangen ist, dessen Übertragung auf dem Zubringerkanal erwartet wird, so daß sichergestellt wird, daß der Zubringerkanal frei ist oder daß erwartet wird, daß er frei ist, wodurch Kollisionen von zugehenden Nachrichten von wenigstens zwei Außeneinheiten vermieden werden.

10. Eine Außeneinheit zum Betrieb in einem RF-Kommunikationssystem mit wenigstens einer Basisstation, die auf einem Abnehmerkanal überträgt, und mit einer Mehrzahl von Außeneinheiten, die an die Basisstation auf einem Zubringerkanal übertragen, wobei die Außeneinheit aufweist:
einen Empfänger, der so vorgesehen ist, daß er auf dem Abnehmerkanal eine abgehende Nachricht empfängt, wobei jede abgehende Nachricht wenigstens eine Kopfzeile, die Information über die Länge einer codierten Nachricht umfaßt, eine codierte Nachricht und ein eingebettetes Sperrsignal umfaßt,
einen Übertrager, der so vorgesehen ist, daß er eine Bestätigung (ACK) einer vorbestimmten Dauer auf dem Zubringerkanal überträgt, wenn sie durch die abgehende Übertragung gefordert wird;
und die Außeneinheit gekennzeichnet ist durch
eine Einrichtung, die so vorgesehen ist, daß sie für diese Außeneinheit einen Sperrzustand bestimmt, der eine Zeitdauer umfaßt, die sich über die Dauer der übertragenen codierten Nachricht erstreckt, ausreichend ist, um das ACK herbeizuführen, wenn dasselbe gefordert wird, wobei der Sperrzustand auf dem eingebetteten Sperrsignal und der Information in der Kopfzeile vor der Übertragung auf dem Zubringerkanal basiert, und wobei der Sperrzustand einen ersten Abschnitt umfaßt, der im wesentlichen der Zeitdauer der übertragenen abgehenden Nachricht entspricht und für alle Außeneinheiten mit Ausnahme einer Einheit, die momentan auf dem Zubringerkanal überträgt, wirksam ist, und einen zweiten Abschnitt umfaßt, der sich über den ersten Abschnitt erstreckt, ausreichend ist, um das ACK herbeizuführen, wenn dasselbe gefordert wird, und für alle Außeneinheiten mit Ausnahme einer Einheit oder von Einheiten, die in der übertragenen abgehenden Nachricht adressiert ist bzw. sind und von der bzw. denen gefordert wird, daß sie eine derartige ACK-Antwort auf eine abgehende Nachricht hin übertragen, wirksam ist.

## Revendications

1. Dans un système de communication de fréquence radio (RF) possédant au moins un poste de base émettant sur un canal sortant et une pluralité d'unités à distance émettant vers ledit poste de base sur un canal entrant, procédé pour empêcher des collisions dans les transmissions entrantes utilisées par ladite pluralité d'unités à distance, caractérisé par les étapes suivantes:
a) la réception sur la pluralité d'unités à distance d'une transmission sortante sur le canal sortant, chaque transmission sortante comprenant au moins une entête contenant une information sur la longueur d'un message codé, un message codé et un signal d'inhibition incorporé, au moins certains desdites messages sortants nécessitant un signal d'accusé de réception (ACK) d'une durée prédéterminée sur ledit canal entrant; et
b) la détermination d'un état d'inhibition sur la base dudit signal d'inhibition incorporé et d'une information dans ladite entête avant l'émission sur ledit canal entrant et ledit état d'inhibition comprenant une première partie correspondant essentiellement à la durée dudit message sortant émis et effective pour toutes les unités à distance sauf pour une unité en cours d'émission sur ledit canal entrant, et une seconde partie s'étendant au-delà de la première partie, suffisante pour incorporer ledit signal d'accusé de réception ACK lorsqu'il est requis et effective pour toutes les unités à distance sauf pour une ou des unités adressées dans ledit message sortant émis et requises pour émettre un tel signal d'accusé de réception ACK à un message sortant.

2. Procédé selon la revendication 1, selon lequel l'étape a) comprend la réception d'un message codé sur une unité prescrite à distance, ledit message codé n'étant décodé que lorsque ledit message codé dans ladite transmission sortante est prévu pour ladite unité prescrite à distance.

3. Procédé selon l'une quelconque des revendications précédentes, selon lequel l'étape a) comprend la réception d'une transmission sortante comprenant une pluralité d'entêtes et de messages codés agencés en séquence, ladite transmission sortante comprenant un signal d'inhibition incorporé, et ladite transmission sortante nécessitant un signal d'accusé de réception ACK sur ledit canal entrant pour au moins certains de ladite pluralité de messages codés en séquence.

4. Procédé selon l'une quelconque des revendications précédentes, selon lequel l'étape b) comprend la détermination dudit état d'inhibition pour ladite pluralité d'unités à distance sauf pour une unité prescrite à distance lorsque ledit signal d'inhibition incorporé indique qu'il n'y a pas de transmission entrante vers ledit poste de base de façon à réserver un intervalle de temps pour ledit signal d'accusé de réception ACK à émettre par ladite unité prescrite à distance à la fin de ladite transmission sortante.

5. Procédé selon l'une quelconque des revendications précédentes, selon lequel l'étape b) comprend la détermination dudit état d'inhibition pour pratiquement toutes les unités de ladite pluralité d'unités à distance comprenant une unité prescrite à distance lorsque ledit signal d'inhibition incorporé indique qu'il y a une transmission entrante en cours vers ledit poste de base ayant précédé un signal d'accusé de réception ACK d'une quantité de temps prédéterminée de façon à réserver un intervalle de temps pour ledit signal d'accusé de réception ACK à émettre par ladite unité prescrite à distance à la fin de ladite transmission entrante.

6. Procédé selon l'une quelconque des revendications précédentes, selon lequel l'étape b) comprend la détermination dudit état d'inhibition pour ladite pluralité d'unités à distance sauf pour une première unité prescrite à distance et une seconde unité à distance lorsque ledit signal d'inhibition incorporé indique qu'il y a une transmission entrante vers ledit poste de base, ladite première unité prescrite ayant décodé un premier message sur ladite transmission sortante et attendant un intervalle de temps pour le signal d'accusé de réception ACK, et ladite seconde unité à distance ayant décodé un message suivant dans ladite transmission sortante dudit poste de base de façon à réserver un intervalle de pile à la fin de ladite transmission entrante vers ledit poste de base, ledit intervalle de pile autorisant au moins un intervalle de temps pour un signal d'accusé de réception ACK de ladite seconde unité à distance et un intervalle de temps adjacent pour un signal d'accusé de réception ACK de ladite première unité à distance.

7. Procédé selon la revendication 6, selon lequel ledit signal d'inhibition incorporé comprend au moins certains bits d'une séquence de bits de données numériques incorporés dans ladite transmission sortante.

8. Procédé selon la revendication 7, selon lequel lesdits bits de données numériques comprennent au moins trois bits, comprenant :
- des 1 numériques indiquant une activité de canal entrant de façon à empêcher une transmission concourante sur ledit canal entrant;
- des 0 numériques indiquant une inactivité de canal entrant de façon à permettre une transmission sur ledit canal entrant; et
- un mélange de 1 et 0 numériques indiquant un état indéfini d'activité de canal entrant de façon retarder une transmission jusqu'à la réception d'un nouvel ensemble d'au moins trois bits de données numériques.

9. Procédé selon l'une quelconque des revendications précédentes, comprenant, de plus :
d) une étape d'émission sur ledit canal entrant lorsque ledit canal entrant n'a pas de signal d'accusé de réception ACK en cours, pas de message entrant en cours et pas de message entrant en cours ayant précédé au moins un signal d'accusé de réception ACK requis prévu pour être émis sur ledit canal entrant de façon à s'assurer que ledit canal entrant est libre ou est prévu comme libre, évitant ainsi des collisions de transmission entrantes à partir d'au moins deux unités à distance.

10. Unité à distance pour un système de communication de fréquence radio (RF) possédant au moins un poste de base émettant sur un canal sortant et une pluralité d'unités à distance émettant vers ledit poste de base sur un canal entrant, l'unité à distance comprenant :
- un récepteur prévu pour recevoir sur le canal sortant une transmission sortante, chaque transmission sortante comprenant au moins une entête contenant une information sur la longueur d'un message codé, un message codé et un signal d'inhibition incorporé;
- un émetteur prévu pour émettre un signal d'accusé de réception (ACK) d'une durée prédéterminée sur ledit canal entrant lorsque requis par la transmission sortante; et
unité à distance caractérisée par :
- un moyen prévu pour déterminer, pour cette unité à distance, un état d'inhibition comprenant une période de temps s'étendant au-delà de la durée dudit message codé émis, suffisante pour englober ledit signal d'accusé de réception ACK lorsqu'il est requis, ledit état d'inhibition étant basé sur ledit signal d'inhibition incorporé et l'information de ladite entête avant l'émission sur ledit canal sortant; et ledit état d'inhibition comprenant une première partie correspondant essentiellement à la durée dudit message sortant émis et effective pour toutes les unités à distance sauf pour une unité en cours d'émission sur ledit canal entrant, et une seconde partie s'étendant au-delà de ladite première partie, suffisante pour englober ledit signal d'accusé de réception ACK lorsqu'il est requis et effective pour toutes les unités à distance sauf pour une ou des unités adressées dans ledit message sortant émis et requises pour émettre un tel signal d'accusé de réception ACK d'un message sortant.
